# EUROPÄISCHE PATENTSCHRIFT

(11) **EP 1 817 978 B1**
(45) Veröffentlichungstag und Bekanntmachung des Hinweises auf die Patenterteilung: **29.07.2015**
(21) Anmeldenummer: 06002633.3
(22) Anmeldetag: 09.02.2006
(51) Int. Cl.: A46B 5/00, B25G 3/38, A47L 13/022, B29C 45/00

(54) **Kehrvorrichtung mit Drehgelenkstielhalter, Drehgelenkstielhalter, sowie Verfahren und Spritzgiesswerkzeug zur Herstellung des Drehgelenkstielhalters**
Sweeping device having a handle holder with a rotary joint, method and device of manufacturing a handle holder with a rotary joint
Dispositif de balayage comprenant un porte-manche avec joint rotatif, procédé et dispositif de fabrication d'un porte-manche avec joint rotatif

(43) Veröffentlichungstag der Anmeldung: 15.08.2007
(73) Patentinhaber: Trisa Holding AG, 6234 Triengen (CH)
(72) Erfinder: Gabriele, Ezio, 9631 Ulisbach (CH)
(74) Vertreter: Schaad, Balass, Menzl & Partner AG

(56) Entgegenhaltungen:
- EP-A- 0 785 050
- EP-A- 1 075 806
- WO-A-03/034863
- CA-A1- 2 415 879
- DE-U1- 29 614 364
- PATENT ABSTRACTS OF JAPAN Bd. 1999, Nr. 06, 31. März 1999 (1999-03-31) -& JP 01 101915 A (LEE ROBERT M), 19. April 1989 (1989-04-19)

## Beschreibung

Die vorliegende Erfindung betrifft eine Kehrvorrichtung gemäss dem Oberbegriff des Patentanspruches 1, einen Drehgelenkstielhalter gemäss dem Oberbegriff des Patentanspruchs 3, sowie ein Verfahren zur Herstellung eines Drehgelenkstielhalters gemäss dem Patentanspruch 13 sowie ein Spritzgiesswerkzeug gemäss dem Patentanspruch 15.

US 1,687,953 offenbart eine Kehrvorrichtung mit einem Drehgelenkstielhalter, dessen Sockelteil mittels vier Flanschen und vier durch diese hindurchführenden Schrauben an einem Bürstenkopf befestigt ist. Der Sockelteil definiert eine Hochachse, an welcher ein Gehäuseteil des Drehgelenkstielhalters mittels einer Schrauben-Mutter-Verbindung drehbar gelagert ist. Der blecherne, rohrförmige Grundkörper des Sockelteils weist zudem zirka längsmittig eine Blechrondelle auf, die mit einer bogenförmigen, zur Hochachse koaxialen Nut versehen ist, von der mehreren Quernuten wegführen, die radial zur Hochachse ausgerichtet sind. Der Gehäuseteil ist ebenso wie der Sockelteil aus Blech gefertigt und weist eine U-profilartige Form mit einer Basis und zwei Schenkeln auf, wobei eine Aussenseite der Basis des Gehäuseteils auf einer Oberkante des Sockelteils aufliegt, sofern sich der Sockelteil und der Gehäuseteil in einer der festgelegten Drehpositionen um die Hochachse befinden. An der Aussenseite der Basis des Gehäuseteils ist ein Führungsstück befestigt, welches einen bogenförmigen Führungskörper aufweist, der dazu bestimmt ist, in der bogenförmigen Nut der Blechrondelle des Sockelteils zu laufen. Zudem ist der Führungskörper mit radial zur Hochachse ausgerichteten Quernocken versehen, die dazu bestimmt sind, mit den Quernuten der Blechrondelle des Sockelteils durch Formschluss arretierend zusammen zu wirken. Der Gehäuseteil weist zudem eine Querachse auf, an welcher ein Stiel drehbar gelagert ist, wobei ein abgeflachtes Ende des Stiels zwischen den Schenkeln geführt und gehalten ist. Der Stiel, sowie der Gehäuseteil weisen eine Rastklinke, bzw. eine weitere, zur Rastklinke passende, bogenförmige Nut auf, mit denen die Schrägstellung, also die Neigung des Stiels relativ zum Bürstenkopf formschlüssig einstellbar ist. Eine Veränderung der Drehposition des Gehäuseteils relativ zum Sockelteil des Drehgelenkstielhalters kann dadurch vorgenommen werden, dass der Stiel, relativ zum Bürstenkopf gesehen, angehoben wird, wodurch der Gehäuseteil relativ zum Sockelteil in eine leichte Schräglage verbracht werden kann, so dass dessen Basis nur noch an einer Stelle mit der Oberkante des Sockelteils anliegt. Da der Führungskörper in Richtung der Oberseite des Bürstenkopfes gesehen, unterhalb des Stiels angeordnet ist, führt dies bei einer Schräglage des Gehäuseteils relativ zum Sockelteil dazu, dass die Quernocken des Führungskörpers aus den entsprechenden Quernuten des Sockelteils herausgehoben werden, wodurch eine Drehbewegung des Gehäuseteils relativ zum Sockelteil um die Hochachse ermöglicht wird. Die Schräglage des Gehäuseteils relativ zum Sockelteil wird so lange aufrecht erhalten, bis die gewünschte Drehposition des Stieles relativ zum Bürstenkopf erreicht ist. Danach wird der Stiel entlastet, wodurch der Gehäuseteil versucht, die Schräglage zu verlassen und sich wieder an die Oberkante des Sockelteils zu schmiegen. Die notwendige Anpresskraft entsteht dabei dadurch, dass die Blechrondelle des Sockelteils und die Basis des Gehäuseteils durch die starre Schrauben-Mutter-Verbindung zusammengehalten werden, und die Ausnutzung der Nachgiebigkeit der Blechteile. Somit werden die Quernocken des Führungskörpers solange gegen eine Stirnfläche der Blechrondelle gedrückt, bis die Quernocken des Führungskörpers in die nächstliegenden Quernuten der Blechrondelle einrasten.

Die WO 03/034863 A1 offenbart ein Haltegerät zum Halten eines Interdentalreinigungsmittels. Dieses umfasst einen Handgriff und einen Spannkopf zur Aufnahme eines länglichen Fortsatzes des Interdentalreinigungsmittels, Der Spannkopf umfasst einen Grundkörper und eine um diesen herum angebrachte, drehbare Hülse. Diese Hülse und der Grundkörper haben eine gemeinsame Bohrung für die Aufnahme des betreffenden Anhangsteiles, wobei diese Bohrung bezogen auf die Rotationsachse der Hülse parallel und versetzt ausgerichtet ist. Der Grundkörper besitzt am gegenüberliegenden Ende ein Gelenk, an welchem der Handgriff angebracht ist und welcher so ausgeformt ist, dass er das Gelenk umgreift und auch den Gelenkbolzen integriert. Dabei ist im Kontaktbereich zwischen Handgriff und Gelenk eine Rastverzahnung angebracht, wodurch der Handgriff relativ zum Rest um die Achse der Gelenks verdreht und positioniert werden kann. Der Grundkörper, die Hülse und der Halter sind aus Kunststoff, wobei das Gelenk durch Umspritzen des vorgespritzten und zumindest teilausgehärteten Grundkörpers entsteht und ein Verbinden durch geeignete Kunststoffwahl der beiden Teile vermieden wird.

EP 0 785 050 A2 offenbart eine Spülbürste mit einem Handgriff und einem an einem Ende des Handgriffes festgelegten Bürstenkopf. Um die Spülbürste hinsichtlich ihrer Nutzungsmöglichkeiten praxisgerecht zu gestalten, ist der Handgriff mit mindestens einem Gelenkbereich versehen und in diesem Gelenkbereich für unterschiedliche Anwendungsfälle verstellbar. In einer speziellen Ausführung sind zwei Gelenkbereiche vorgesehen, wobei dann ein Gelenkbereich im Übergangsbereich zwischen einem den Bürstenkopf aufnehmenden Kopfteil und einem ersten Teilabschnitt und der zweite Gelenkbereich etwa im mittleren Bereich des Handgriffes angeordnet ist.

Es ist eine Aufgabe der vorliegenden Erfindung die gattungsgemässe Kehrvorrichtung und den bekannten Drehgelenkstielhalter zu vereinfachen und deren, bzw. dessen Herstellbarkeit zu verbessern.

Zudem ist es eine weitere Aufgabe der vorliegenden Erfindung, ein Verfahren zur einfachen und schnellen Herstellung eines Drehgelenkstielhalters bereit zu stellen.

Diese Aufgaben werden jeweils mit einer erfindungsgemässen Kehrvorrichtung gemäss Anspruch 1, einem erfindungsgemässen Drehgelenkstielhalter gemäss Anspruch 3, einem erfindungsgemässen Verfahren gemäss Anspruch 13, sowie einem Spritzgiesswerkzeug gemäss Anspruch 15 gelöst.

Die Aufgaben werden dadurch gelöst, dass ein Sockelteil des Drehgelenkstielhalters aus einem ersten Kunststoff gefertigt ist und ein Gehäuseteil des Drehgelenkstielhalter aus einem zweiten Kunststoff gefertigt ist, wobei sich die Kunststoffe beim Spritzgiessen nicht miteinander verbinden, sowie dadurch, dass der Gehäuseteil formschlüssig und untrennbar am Sockelteil gehalten ist. Dadurch ist es möglich, den Gehäuseteil und den Sockelteil jeweils einteilig auszubilden, was die Teileanzahl auf ein Minimum verringert. Ein weiterer Vorteil liegt darin, dass der Sockelteil und der Gehäuseteil nach deren Herstellung nicht in einem nachfolgenden Montagegang zusammengefügt werden müssen, da der Sockelteil nach der Herstellung des Gehäuseteiles durch Spritzgiessen formschlüssig und untrennbar mit dem Gehäuseteil verbunden ist. Somit kann der Spritzgiessmaschine nach dem Einspritzen des zweiten Kunststoffs ein bereits fertiger Drehgelenkstielhalter entnommen werden. Nach dem Befestigen des Drehgelenkstielhalters am Kehrkopf, insbesondere eines Stossbesenkopfes oder eines Schrubberkopfes, ist die Endmontage der Kehrvorrichtung bereits abgeschlossen. Dadurch, dass der Gehäuseteil und der Sockelteil des Drehgelenkstielhalters unverlierbar sind, dürfte die sogenannte Narrensicherheit des Drehgelenkstielhalters, bzw. der Kehrvorrichtung um ein bedeutendes Mass gesteigert werden.

Durch eine Aufnahmeöffnung, welche bevorzugt mit einem Innengewinde versehen ist, kann ein Stiel demontierbar am Gehäuseteil befestigt werden, ohne dass ein zusätzliches Einstellen einer Schräglage zur Drehachse anfällt. Dadurch wird der Kehrkopf auswechselbar. Einen zusätzlichen Vorteil bildet die vordefinierte Schräglage zur Drehachse am Gehäuseteil, womit der Winkel des Stiels zum Kehrkopf definiert ist, was für den Hersteller vorteilhaft ist, da er auf die komplizierte Schräglageneinstellvorrichtung, bzw. Stielneigungsvorrichtung verzichten kann, was sich positiv auf eine erwünschte, minimale Teilekomplexität und -anzahl auswirkt.

Der Anspruch 4 beschreibt eine besonders bevorzugte Ausführungsform des Drehgelenkstielhalters zum Erreichen eines einfach aufgebauten Formschlusses zwischen Gehäuseteil und Sockelteil. Für den Anwender entsteht der Vorteil, dass formschlussbedingt alle Teile des Drehgelenkstielhalter unverlierbar zusammengehalten sind.

Eine weitere, bevorzugte Ausführungsform des erfindungsgemässen Drehgelenkstielhalter ist im Anspruch 5 beschrieben. Dadurch, das die Rastelemente der Rastvorrichtung direkt am Gehäuseteil und am Sockelteil angeformt sind, entfallen diesbezügliche Einzelteile. Da die Arretierung des Gehäuseteils bezüglich des Sockelteils kraftschlüssig ist, ist ein Einrasten der Rastelemente vom Anwender spürbar erkennbar, ohne dass er die Funktionsweise des Rastmechanismus kennen muss, um eine Veränderung der Drehposition einwandfrei ausführen zu können.

Anspruch 6 beschreibt eine besonders bevorzugte Ausführungsform des Drehgelenkstielhalter mit einer besonders einfach aufgebauten Geometrie. Dadurch, dass die Rastnocken auf einer der Unterseite abgewandten Oberseite des Sockels angeordnet sind, und die entsprechenden Rastvertiefungen auf einer Innenfläche des Gehäuseteils angeordnet sind, entsteht der Vorteil, dass durch die Anordnung der Rastelemente im Inneren des Drehgelenkstielhalters, diese vor einer Beschädigung von Aussen weitestgehend geschützt sind, was sich positiv auf die Lebensdauer des Drehgelenkstielhalters auswirken dürfte. Ein weiterer Vorteil dieser Ausführungsform besteht darin, dass der äusseren Gestaltung des Drehgelenkstielhalters, bzw. dessen Gehäuseteils kaum Grenzen gesetzt sind, da sich die Rastvorrichtung die Äussere Erscheinung des Gehäuseteils nicht beeinträchtigt. Die Eigenelastizität des Kunststoffes des Gehäuseteils wird dazu genutzt, die Federeigenschaften der Rastelemente zu verstärken, ohne dass dazu zusätzliche Federelemente erforderlich sind.

Bei der im Anspruch 7 beschriebenen Ausführungsform wird die Federeigenschaft, bzw. die Eigenelastizität des Kunststoffes, der zur Herstellung des Gehäuseteils verwendet worden ist, bewusst dazu genutzt, die Federeigenschaften der Rastelemente zu verstärken, ohne dass dazu ein zusätzliches Federelement erforderlich wird. Durch des Anordnen der umfangsseitig verlaufenden Schlitze beidseits der Rastnocken wird die Federeigenschaft zusätzlich verbessert, indem ein blattfederartiger Gehäuseabschnitt im Gehäuseteil erzeugt wird. In der Folge lassen sich die Rastnocken sehr gut und deutlich spürbar aus den entsprechenden Vertiefungen bewegen und rasten auch besser wieder in diese ein. Als zusätzlicher Vorteil kann aufgrund des verbesserten Arretierverhaltens ein unbeabsichtigtes Verändern der vom Anwender gewählten Drehposition, beispielsweise durch Aufbringen eines Drehmomentes auf den Kehrkopf infolge Anstossen des Kehrkopfes an einer Fussleiste, weitgehend verhindert werden.

Eine weitere, bevorzugte Ausführungsform des erfindungsgemässen Gelenkstielhalters ist in Anspruch 8 beschrieben. Dadurch, dass die innenliegenden Federelemente, bzw. Federabschnitte weitgehend flächig in die an der Mantelfläche des Sockelteils angeordneten Rastvertiefungen eingreifen, kann der Rasteffekt der Rastvorrichtung weiter verbessert werden, womit das Einrasten der Rastfedern in die entsprechenden Rastvertiefungen des Sockelteils für den Anwender noch besser spürbar sein dürfte. Dadurch, dass die Rastfedern im Gehäuseinneren angeordnet sind, entsteht der Vorteil, dass ein Zusammenwirken der Rastelemente ausserhalb des Gehäuseteils nicht wahrnehmbar ist und somit die Gestaltungsfreiheit des Gehäuseteils nicht eingeschränkt wird.

Die in Anspruch 9 beschriebene Ausführungsform hat den Vorteil, dass die Komplexität der Verdrehsicherung des Sockelteils gegenüber dem Kehrkopf auf ein Minimum reduziert werden kann. Diese Reduktion der Komplexität dürfte sich insbesondere bei der Herstellung der Kehrvorrichtung positiv auswirken, da damit die Anzahl an Montagemanipulationen weiter gesenkt werden kann.

Bei der im Anspruch 10 beschriebenen Ausführungsform des erfindungsgemässen Drehgelenkstielhalters entstehen durch das kleinere Schwindmass des Kunststoffs des Gehäuseteils gegenüber dem Kunststoff des Sockelteils gute Laufeigenschaften, indem ein Spiel zwischen den beiden Teilen geschaffen wird. Der Anwender muss dadurch eine geringere Kraft aufwenden, um den Gehäuseteil gegenüber dem Sockelteil von einer Drehposition in eine weitere Drehposition zu drehen.

Die in Anspruch 11 beschriebene Ausführungsform hat den Vorteil, dass eine kostengünstige Herstellung des Drehgelenkstielhalters erleichtert wird, ohne die Gleiteigenschaften des Gehäuseteils relativ zum Sockelteil zu beeinträchtigen. Dadurch, dass Polyamid als Grundmaterial für den Gehäuseteil gewählt wird, kann die Zähigkeit dieses Materials zum Schutz des Drehgelenks und damit zur Verbesserung der Lebensdauer der Kehrvorrichtung beitragen. Zudem erlaubt dieses Material eine sichere Befestigung eines Stiels am Gehäuseteil, was sich positiv auf die Arbeitssicherheit auswirken dürfte.

Das in Anspruch 13 beschriebene Verfahren zur Herstellung eines Drehgelenkstielhalters, weist den Vorteil auf, dass kein weiterer Montageschritt zum Zusammensetzen des Gehäuseteils am Sockelteil anfällt, sondern der Spritzgiessmaschine ein fertiggestellter Drehgelenkstielhalter entnehmbar ist.

Das erfindungsgemässe Verfahren gemäss Anspruch 14 hat den Vorteil, dass beide Kunststoffe kostengünstig verarbeitbar sind und zusammen befriedigende Ergebnisse bezüglich des Drehverhaltens des Gehäuseteils am Sockelteil gewährleisten.

Sowohl bei der Kehrvorrichtung gemäss den Ansprüchen 1 und 2, als auch beim Drehgelenkstielhalter gemäss den Ansprüchen 1 bis 12 entsteht für den Anwender der Zusatzvorteil, dass eine Veränderung der Drehposition des Gehäuseteils gegenüber dem Kehrkopf einzig durch eine Drehung des Gehäuseteils um die gemeinsame Drehachse bewerkstelligt werden kann, ohne dass dazu eine mehrdimensionale Manipulation notwendig ist. Eine Veränderung der Drehposition kann beispielsweise dadurch erreicht werden, dass der Kehrkopf an einer zu reinigenden Fläche seitlich oder stirnseitig abgestützt wird, während der beispielsweise durch eine Hand querkraftbeaufschlagte Stiel derart auf den Gehäuseteil des Drehgelenkstielhalters einwirkt, dass die Rastelemente eine erste Drehposition verlassen und in einer weiteren Drehposition einrasten, sobald der Anwender die Querkraft am Stiel erheblich reduziert.

Die Erfindung wird im folgenden anhand der Zeichnungen näher erläutert. Es zeigen rein schematisch:
- Fig. 1: eine Seitenansicht einer erfindungsgemässen Kehrvorrichtung mit einer ersten Ausführungsform des erfindungsgemässen Drehgelenkstielhalters;
- Fig. 2: eine längsmittige Schnittansicht durch die in Fig.1 gezeigte Kehrvorrichtung;
- Fig. 3: im Querschnitt einen Sockelteil der in Fig.2 gezeigten Kehrvorrichtung;
- Fig. 4: im Querschnitt einen Gehäuseteil der in Fig.2 gezeigten Kehrvorrichtung;
- Fig. 5: im Querschnitt eine zweite Ausführungsform des erfindungsgemässen Drehgelenkstielhalters;
- Fig. 6: im Querschnitt einen Sockelteil des in Fig.5 gezeigten Drehgelenkstielhalters;
- Fig. 7: eine Draufsicht des Sockelteils gemäss Fig.6;
- Fig. 8: im Querschnitt einen Gehäuseteil des in Fig.5 gezeigten Drehgelenkstielhalters;
- Fig. 9: im Querschnitt eine dritte Ausführungsform des erfindungsgemässen Drehgelenkstielhalters;
- Fig. 10: eine perspektivische Unteransicht des in Fig.9 gezeigten Drehgelenkstielhalters;
- Fig. 11: im Querschnitt einen Sockelteil des in Fig.9 gezeigten Drehgelenkstielhalters;
- Fig. 12: eine perspektivische Unteransicht des in Fig.10 gezeigten Sockelteils;
- Fig. 13: im Querschnitt einen Gehäuseteil des in Fig.9 gezeigten Drehgelenkstielhalters;
- Fig. 14: eine perspektivische Unteransicht des in Fig.10 gezeigten Gehäuseteils; und
- Fig. 15: im Querschnitt ein Spritzgiesswerkzeug zur Herstellung eines Gehäuseteils für einen Drehgelenkstielhalter der ersten Ausführungsform mit einem in eine Kavität eingelegten Sockelteil.

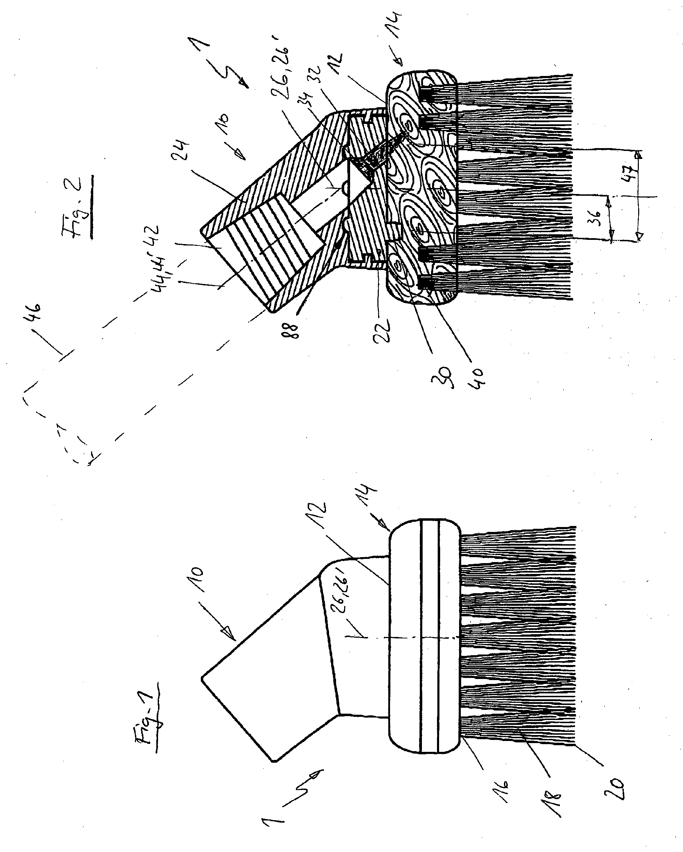

Die Fig. 1 zeigt in Seitenansicht eine erfindungsgemässe Kehrvorrichtung 1 mit einer ersten Ausführungsform eines erfindungsgemässen Drehgelenkstielhalters 10. Der Drehgelenkstielhalter 10 ist an einer Oberseite 12 eines im vorliegenden Fall aus Holz bestehenden Borstenträgers des Kehrkopfes 14 befestigt. Der Borstenträger weist auf seiner Unterseite 16 mehrere Borstenbündel 18 auf, die sich jeweils aus mehreren Borsten 20 zusammensetzen. Ein solcher Kehrkopf 14, bzw. Bürstenkopf ist z.B. als Stossbesen oder Schrubber einsetzbar.

In Fig.2 ist der Drehgelenkstielhalter 10 in derselben Position gezeigt, in der er sich auch in Fig. 1 befindet. Der Drehgelenkstielhalter 10 weist einen einteiligen Sockelteil 22 auf, der formschlüssig und untrennbar mit einem einteiligen Gehäuseteil 24 verbunden ist. Der kreiszylindrische Sockelteil 22 definiert dabei eine Drehachse 26, um welche der Gehäuseteil 24 drehbar ist, dessen Drehachse 26' mit der Drehachse 26 des Sockelteils 22 zusammenfällt. Der Sockelteil 22 weist eine wenigstens annähernd ebene Unterseite 28 auf, die ungefähr mittig auf der Oberseite 12 des Kehrkopfes 14 anliegend positioniert ist. Der Sockelteil 22 ist mittels dreier aus der Ebene hervorragender Vorsprünge 30 und einer Schraube 32 verdrehsicher am Kehrkopf 14 befestigt. Bei der Schraube 32 handelt es sich um eine Senkkopfschraube mit einem Schraubenschlitz 34.

Um den aus einem ersten Kunststoff gefertigten Sockel 22 möglichst optimal drehfest am Kehrkopf 14 zu befestigen, sind die drei Vorsprünge 30 und ein Punkt, an dem die Schraube 32 vom Sockelteil 22 in die Oberseite 12 des Kehrkopfs 14 eintritt, jeweils um 90° versetzt auf einem um die Drehachse 26 verlaufenden Kreis mit einem Kreisradius 36 angeordnet. Der Borstenträger des Kehrkopfs 14 weist auf seiner Oberseite 12 zur Aufnahme der Vorsprünge 30 entsprechende Vertiefungen 40 auf, welche im wesentlichen komplementär zum Vorsprung 30 des Sockelteils 22 geformt sind.

Der Gehäuseteil 24 hat eine äussere Erscheinung, bzw. Kontur, welche an einen abgeknickten Kegelstumpf erinnert, wobei die Basis des Kegelstumpfs rechtwinklig zur Drehachse 26,26' verläuft und daher gegen die Oberseite 12 des Borstenträgers des Kehrkopfes 14 gerichtet ist.

Der Gehäuseteil 24 definiert eine Schrägachse 44', die in der Fortsetzung einer Schrägachse 44 des Sockelteils 22 liegt. Die Drehachsen 26, 26' und die Schrägachsen 44,44' queren sich unter einem Winkel 45. In einem, dem Sockelteil 22 abgewandten Endabschnitt des Gehäuseteils 24 ist koaxial zur Schrägachse 44' verlaufend eine Aufnahmeöffnung 42 mit einem konischen Innengewinde 70 zur Aufnahme eines Stielendes mit einem entsprechen geformten Aussengewinde eines stilisiert dargestellten Stiels 46 angeordnet. Die konische Aufnahmeöffnung 42 weitet sich dabei von der Drehachse 26' her konisch auf.

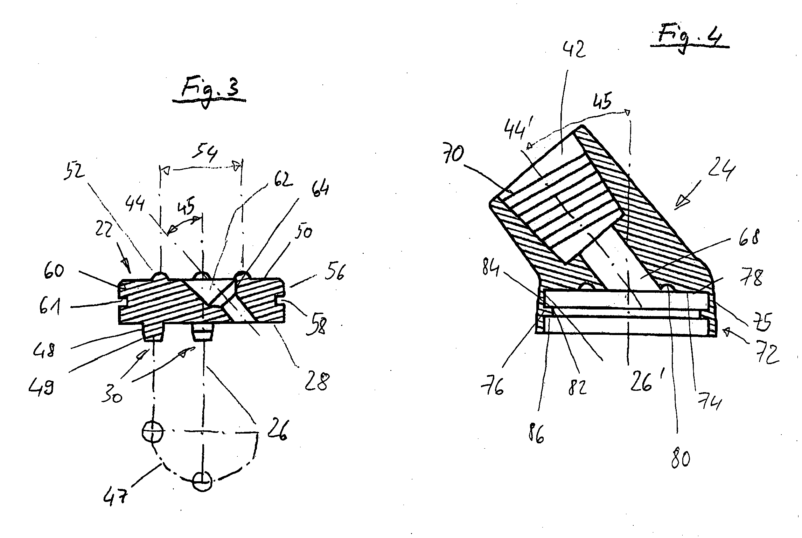

Die Fig.3 zeigt eine Schnittansicht durch den Sockelteil 22 entsprechend der Fig.2. Auf der Unterseite 28 des kreiszylinderförmigen, scheibenartigen Sockelteils 22 sind drei Vorsprünge 30 jeweils 90° um die Drehachse 26 versetzt auf einem Vorsprungteilkreis 47 angeordnet, der um die Drehachse 26 verläuft. Die Vorsprünge 30 weisen in einem, der Unterseite 28 anschliessenden Abschnitt 48 eine zylinderförmige Form auf, an welchen sich eine kegelstumpfförmiger, sich gegen den Abschnitt 48 verbreiternder Kegelstumpfabschnitt 49 anschliesst. Der Kegelstumpfabschnitt 49 dient zum erleichterten Auffinden und Zentrieren des Sockelteils 22 in den entsprechenden Vertiefungen 40 des Kehrkopfs 14 bei der Montage zu einer Kehrvorrichtung 1.

Auf einer, der Unterseite 28 abgewandten, parallel zur Unterseite 28 verlaufenden Oberseite 50 des Sockelteils 22 sind vier kugelabschnittförmige noppenartige Rastnocken 52 jeweils 90° zueinander versetzt auf einem Rastelementteilkreis 54 angeordnet. Die Rastnocken 52 sind dabei symmetrisch auf dem Rastelementteilkreis 54 um die Drehachse 26 angeordnet.

Der Sockelteil 22 weist eine kreiszylinderförmige Mantelfläche 56 auf, welche zirka mittig von einer umlaufende Nut 58 derart unterbrochen ist, dass ein an die Oberseite 50 des Sockels 22 anschliessender umlaufender Kragen 60 mit einer Schulter 61 gebildet wird. Koaxial zur Schrägachse 44 führt ein Durchgangsloch 62 von der Oberseite 50 durch zur Unterseite 28 des Sockelteils 22. Zirka längsmittig ist durch Absetzen des Durchgangsloches 62 eine Befestigungsschulter 64 zur Abstützung des kegelförmigen Schraubenkopfes angeordnet. Das Durchgangsloch 62 ist als Folge davon in einem der Unterseite 28 näherliegenden Abschnitt verjüngt ausgebildet.

Die Fig.4 zeigt einen Querschnitt durch das Gehäuseteil 10 entsprechend Fig.2. Da die Achsen 26 und 26' sowie die Achsen 44 und 44' jeweils aufeinanderliegen, resultiert wieder der Winkel 45 zwischen der Schrägachse 44' und der Drehachse 26'. Der Gehäuseteil 24 wird beim Umspritzen des Sockelteils 22 geschaffen. Zwecks Befestigung des Drehgelenkstielhalters 10 auf dem Borstenträger des Kehrkopfs 14 weist der Gehäuseteil 24 eine koaxial zur Schrägachse 44' verlaufendes, kreiszylindrisches Durchgangsöffnung 68 auf.

Zum formschlüssigen und untrennbaren Halten des Sockelteils 22 am Gehäuseteil 24 weist der Gehäuseteil 24 in einem, der Aufnahmeöffnung 42 abgewandten, dem Kehrkopf 14 zugewandten Sockelabschnitt 72 eine Innenkontur 74 auf, die gegenförmig zu einem Kontaktbereich der Aussenkontur des Sockelteils 22 ist. Der Kontaktbereich umfasst dabei die Mantelfläche 56, die Nut 58 und die Oberseite 50 mit den angeordneten Rastnocken 52, jedoch nicht das Durchgangsloch 62. Die Innenkontur 74 bildet einen umlaufenden Wandbereich 75 mit einem Steg 76, welcher gegengleich zur umlaufenden Nut 58 des Sockelteils 22 ausgebildet ist. Dieser Steg 76 hintergreift den Sockelteil 22 an dessen Kragen 60 und hält ihn dadurch untrennbar und formschlüssig am Gehäuseteil 24 fest.

Eine zur Oberseite 50 des Sockelteils 22 komplementäre Innenfläche 78 weist entsprechend den Rastnocken 52 des Sockelteils 22 geformte Rastvertiefungen 80 auf. Der Steg 76 weist eine radial gegen die Drehachse 26' gerichtete Stegmantelfläche 82 und eine Stegschulter 84 auf, die gegen den Kragen 60, bzw. die Innenfläche 78 des Gehäuseteils 24 gerichtet ist, sowie eine parallel dazu verlaufende, ebenfalls zur Drehachse 26' ausgerichtete, umlaufende, von der Innenfläche 78 abgewandte, weitere Stegschulter 86 auf. Die weitere Stegschulter 86 ist von der Unterseite 28 des Sockelteils 22 in Richtung der Oberseite 50 des Sockelteils 22 leicht zurückversetzt, um nicht in Kontakt mit der Oberseite 12 des Kehrkopfs 14 zu gelangen und somit keine unnötige Reibung zu verursachen, welche beim Drehen des Drehgelenkstielhalters 10 um die Drehachse 26, 26' behindernd wirken könnte.

Zum Arretieren des Gehäuseteils 24 am Sockelteil 22 in den vordefinierten Drehpositionen wird durch die Rastnocken 52 auf der Oberseite 50 des Sockelteils 22 und die entsprechend geformten Rastvertiefungen 80 auf der Innenfläche 78 des Gehäuseteils 24 eine Rastvorrichtung 88 gebildet.

Das Durchgangsloch 62 des Sockelteils 22 und die Durchgangsöffnung 68 des Gehäuseteils fluchten nur in der in Fig.2 gezeigten Drehposition. Daher kann die Schraube 32 nur in dieser Drehposition in den Drehgelenkstielhalter 10 eingeführt und in den Borstenträger des Kehrkopfes 14 eingedreht werden.

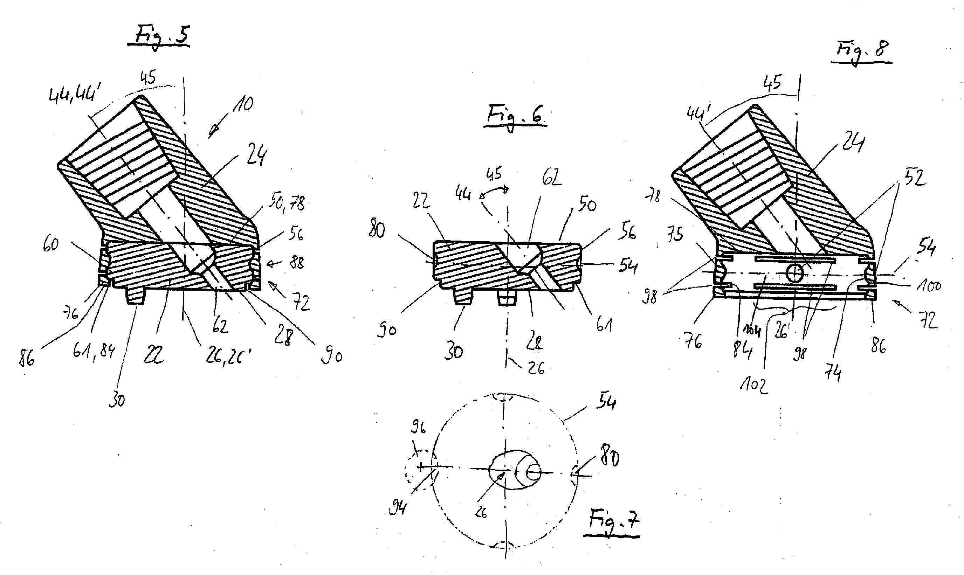

Die Fig.5-8 illustrieren eine zweite Ausführungsform des erfindungsgemässen Drehgelenkstielhalters 10 in einer Schnittansicht in derselben Lage, wie in Fig.2. Für gleich wirkende Teile werden im Folgenden die selben Referenznummern verwendet, wie bei der ersten Ausführungsform. Da die zweite Ausführungsform ähnlich wie die erste Ausführungsform aufgebaut ist, werden nachfolgend nur noch die Unterschiede beschrieben.

Entgegen der ersten Ausführungsform befindet sich die Rastvorrichtung 88 bei der zweiten Ausführungsform im Gehäuseseitigen, innenliegenden Sockelabschnitt 72 sowie auf der umlaufenden Mantelfläche 56 des Sockelteils 22.

Die gesamte Mantelfläche 56 befindet sich dabei stirnseitig am Kragen 60. Angrenzend an die Mantelfläche 56 und die Unterseite 28 des Sockelteils 22 ist ein umlaufender stufenförmiger Absatz 90 eingearbeitet, welcher eine Schulter 61 bildet, die im wesentlichen parallel zur Unterseite 28 des Sockelteils 22 verläuft. Der Gehäuseteil 24 hintergreift mit seinem Steg 76 den Kragen 60 derart, dass der Sockelteil 22 formschlüssig und unverlierbar am Gehäuseteil 24 gehalten ist. Die vom Steg 76 gebildete, weitere Stegschulter 86 ist von der Unterseite 28 des Sockelteils 22 in Richtung der Oberseite 50 des Sockelteils 22 leicht zurückversetzt, damit sie nicht in Kontakt mit der Oberseite 12 des Kehrkopfs 14 gelangen kann und somit keine unnötige Reibung verursacht, um beim Drehen des Gehäuseteils 24 um die Drehachse 26,26' nicht behindernd zu wirken.

Zur Verdeutlichung der Unterschiede der Rastvorrichtung 88 der zweiten Ausführungsform gegenüber der ersten Ausführungsform wird auf die Fig.6, 7 und 8 verwiesen.

Die Fig.6 zeigt einen Schnitt durch den Sockelteil 22 entsprechend der Fig.5. Vier kugelabschnittförmige Rastvertiefungen 80 sind, von der Oberseite 50 des Sockelteils 22 her gesehen, gemäss der Fig.7, in 90°-Abständen ungefähr mittig auf der Mantelfläche 56 auf einem Rastelementteilkreis 54 angeordnet. Die Rastvertiefungen 80 sind dabei radial auf die Drehachse 26 ausgerichtet und weisen eine Eindringtiefe 94 in die Mantelfläche 56 von zirka 1/6 des Durchmessers einer, den Kugelabschnitt definierenden, fiktiven Kugel 96 auf, welche in Fig.7 stilisiert dargestellt ist.

Fig.8 zeigt den Gehäuseteil 24 der Fig.5 in derselben Lage, wie in Fig.5. Die rotationsmetrisch um die Drehachse 26' verlaufende Innenkontur 74 des Gehäuseteils 24 ist, mit Ausnahme von Schlitzen 98, wiederum gegengleich zum Sockelteil 22, so wie dies bereits aus Fig.5 hervorgeht. Daher weisen die Rastnocken 52 ebenfalls eine kugelabschnittsförmige Noppenform auf, um mit den entsprechenden Rastvertiefungen 80 des Sockelteils 22 zusammenzuwirken. Eine umlaufende Innenmantelfläche 100 ist komplementär zur Mantelfläche 56 mit den Rastvertiefungen 80 des Sockelteils 22 im Sockelabschnitt 72 des Gehäuseteils 24 ausgebildet und weist daher die Rastnocken 52 auf. Die Wand 75 im Sockelabschnitt 72 ist partiell von vier Paaren von Schlitzen 98 durchdrungen, welche jeweils einer Rastnocke 52 zugeordnet sind und in Drehachsrichtung 26' gesehen oberhalb und unterhalb jedes Rastnockens 52 in Umfangsrichtung verlaufend angeordnet sind, ohne jedoch den Kragen 76 vollständig vom Gehäuseteil 24 und der Wand 75 abzutrennen. Das heisst, die Schlitze 98 erstrecken sich pro Rastnocken 52 nur über einen bestimmten Umfangsbereich 102, dehnen sich je hälftig und umfangsseitig zu jedem Rastnocken 52 auf und erstrecken sich bezüglich der Drehachse 26' über zirka 60° des Umfangs des Rastelementteilkreises 54.

Durch die Anordnung der Schlitze 98 im Sockelabschnitt 72 der Wand 75 entstehen vier lamellenartige Federabschnitte 104 mit jeweils einem mittig darauf angeformten Rastnocken 52. Geometriebedingt wird so ein Federstreifen gebildet, welcher es zusammen mit einer Elastizität des Materials eines zweiten Kunststoffes erlaubt, jeden der noppenförmigen Rastnocken 52 kraftschlüssig in den entsprechenden Rastvertiefungen 80 des Sockelteils 22 zu halten und wieder aus diesen herauszubewegen. Im vorliegenden Fall definiert jede Rastnocke 52 eine Drehposition, wodurch der Drehgelenkstielhalter 10 über vier definierte Drehpositionen verfügt. Durch die Bildung des Federabschnitts 104 wird das Feder-, bzw. Rastverhalten des Rastnockens 52 in der entsprechenden Rastvertiefung 80 des Sockelteils gegenüber einer hier nicht gezeigten Ausführungsform ohne Schlitze 98 verbessert, da die eine grössere Formsteifigkeit als die Federelement 104 aufweisende Gehäusewand 75 in Richtung der Drehachse 26' durch die Schlitze 98 aufgebrochen wird, was zu einer gegenüber ungeschlitzten Abschnitten der Wand 75 höheren Federfreudigkeit des Federabschnitts 104 führt. Diese Federfreudigkeit wird dazu benutzt, dass sich die Rastnocken 52 mit moderatem Kraftaufwand aus den entsprechenden Rastvertiefungen 80 drücken lassen, wodurch der Anwender weniger Querkraft auf den Stiel 46 aufbringen muss, welcher auf den Gehäuseteil 24 einwirkt und ihn dazu veranlasst, seine aktuelle Drehposition zu verlassen. Bei Erreichen einer weiteren Drehposition kann der Anwender ein Einrasten der Rastnocken 52 in die entsprechenden Rastvertiefungen 80 relativ deutlich spüren. Die Schlitze 98 führen somit zu einer erleichterten Drehbarkeit des Gehäuseteils 24 um die Drehachse 26', ohne dass Abstriche des Rastverhaltens gemacht werden müssen.

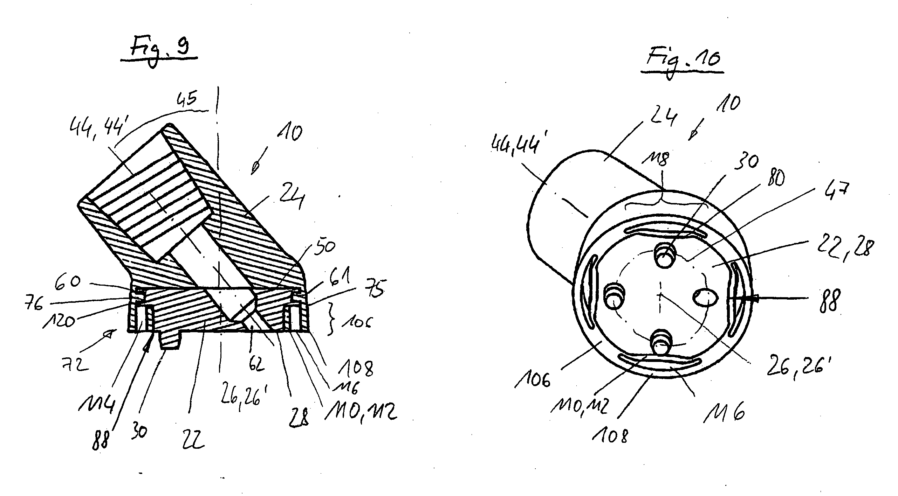

Die Figuren 9-14 zeigen eine dritte Ausführungsform des erfindungsgemässen Drehgelenksteilhalters 10. Bezüglich gleich wirkender Teile gilt dasselbe, wie bei der zweiten Ausführungsform. Im Folgenden liegt der Fokus daher auf den Unterschieden.

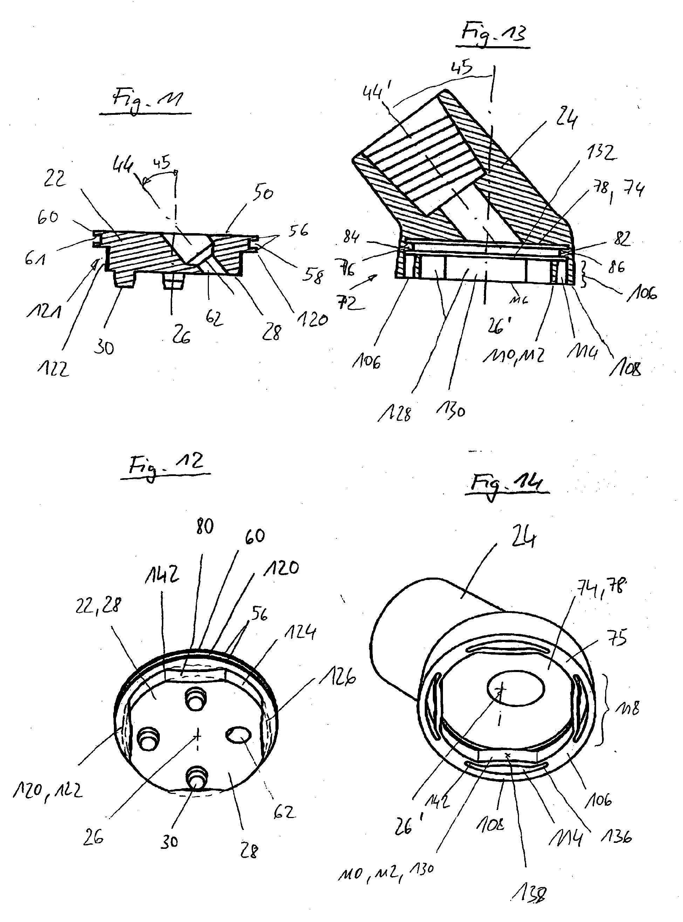

Die Fig.9 zeigt einen Querschnitt durch einen Drehgelenkstielhalter 10 einer dritten Ausführungsform durch die Schnittebene, welche wiederum von den Drehachsen 26,26' und 44,44' gebildet wird. Der Drehgelenkstielhalter 10 ist in derselben Drehposition dargestellt, wie der Drehgelenkstielhalter der Fig. 5. Der Sockelteil 22 weist einen an die Oberseite 50 des Sockels 22 anschliessenden, um die Drehachse 26 umlaufenden Kragen 60 auf, der auf der Oberseite 50 abgewandten Seite eine Schulter 61 aufweist. Der Gehäuseteil 24 ist derart geformt, dass er im Sockelabschnitt 72 wiederum einen umlaufenden, zur Drehachse 26' ausgerichteten Steg 76 aufweist, der den Kragen 60 des Sockelteils 22 hintergreift, was zu einer formschlüssigen, unverlierbaren Verbindung zwischen dem Gehäuseteil 24 und dem Sockelteil 22 führt. Der Sockelteil 22 wird mit Bezug auf die Figuren 11 und 12 beschrieben.

Die Fig.11 zeigt einen Querschnitt des Sockelteils 22 durch die von der Drehachse 26 und der Schrägachse 44 gebildete Schnittebene. Der Sockelteil 22 ist dabei in derselben Lage gezeigt, wie die Sockelteile 22 der Fig.3 und 6. Angrenzend an die Oberseite 50 weist der Sockelteil 22 eine Kreisringförmige Mantelfläche 56 auf, welche von einer rotations-symmetrischen, umlaufenden Nut 58 in zwei Abschnitte geteilt ist, welche die Stirnseiten des bezüglich der Drehachse 26 umlaufend angeordneten, an die Oberseite 50 angrenzenden Kragens 60 mit der Schulter 61, welche der Oberseite 50 abgewandt ist, sowie eines weiteren Kragens 120 bildet. Der Sockelteil 22 ist von der Unterseite 28 her mit einem Freistich 121 versehen, der in Richtung der Drehachse 26 durch den weiteren Kragen 120 und radial zur Drehachse 26 durch eine Mantelkontur 122 begrenzt ist. Die zwei Kragen 60,120 sind somit durch die Nut 58 voneinander getrennt, weisen aber fluchtende Stirnseiten, bzw. eine fluchtende Mantelfläche 56 auf.

Die räumliche Ansicht des Sockelteils 22 in Fig.12 dient zur Illustration der Mantelkontur 122. Der Sockelteil 22 in gleicher Position wie in Fig. 10 dargestellt. Die Mantelkontur 122 besteht aus vier um 90° zueinander um die Drehachse 26 versetzten Restmantelflächen 124 einer kreiszylindrisch um die Drehachse 26 verlaufenden weiteren Mantelfläche 126. Die Restmantelflächen 124 sind durch vier versetzte Rastvertiefungen 80 voneinander getrennt. Die Restmantelflächen 124 grenzen dabei in einem Übergangsbereich 142 an die Rastvertiefungen 80 an. Bei den Rastvertiefungen 80 handelt es sich um konkave, in den Sockelteil 22 eingeformte Rastvertiefungen.

Der Gehäuseteil 24 ist mit Bezug auf die Figuren 13 und 14 beschrieben.

Die Wand 75 des Gehäuseteils 24 weist in Umfangsrichtung verteilt, vier in Umfangsrichtung verlaufende Ausnehmungen 114 auf, welche die Wand 75 jeweils in ein kreisringsegmentartiges, radial äusseres Wandteil 108 und ein radial inneres Wandteil 110, welches als Federelement 112 wirkt, unterteilen.

Fig.13 zeigt einen Schnitt durch den Gehäuseteil 24, entsprechend der in den Fig.4 und 8 dargestellten Drehposition. Die Innenkontur 74 ist entsprechend der Aussenkontur des Sockelteils 22 gegengleich geformt. Im Sockelabschnitt 72 des Gehäuseteils 24 ist der Steg 76 derart ausgebildet, dass der Sockelteil 22 untrennbar und somit unverlierbar am Gehäuseteil 24 gehalten ist.

Entsprechend der Mantelkontur 122 des Sockelteils 22 weist der Gehäuseteil 24 im an die Unterseite 116 angrenzenden Sockelabschnitt 106 eine um die Drehachse 26' verlaufende Innenmantelkontur 128 auf, welche radial innenliegende, gegenförmig den Vertiefungen 80 des Sockelteils 22 angeordnete Rastflächen 130 aufweist. Jeder radial innere, als Federelement 112 ausgebildete Wandteil 110, welcher je eine Rastfläche 130 aufweist, erstreckt sich in Richtung der Drehachse 26' von der Unterseite 116 bis zu einer rotationssymmetrischen, umlaufenden Innennut 132 welche zur Aufnahme des weiteren Kragens 120 des Sockelteils 22 dient.

In der Fig.14 ist der Gehäuseteil 24 in der Position gemäss Fig.10 dargestellt. Die die Federelemente 112 bildenden, inneren Wandteile 110 sind durch die schnitzförmigen Ausnehmungen 114 einzig an beiden Rändern eines Federabschnitts 118 mit dem Wandteil 75 verbunden. In Umfangsrichtung gesehen, ist eine fiktive Rastposition 138 jeweils längsmittig auf jeder Rastfläche 130 definiert. Die schnitzförmige Ausnehmungen 114 erstrecken sich umfangsseitig jeweils hälftig von jeder fiktiven Rastposition 138 drehachsbezogen über etwa 20° über den spiegelsymmetrisch über den Federabschnitt 118. Jede Ausnehmung 114 weist zwei Ausnehmungsenden 136 auf, welche derart gestaltet sind, dass in der Wand 75 jeweils eine Gelenkzone 140 gebildet wird, welche eine dünnere Wandstärke aufweist, als der radial innere Wandteil 110, welcher seinerseits gegenüber dem radial äusseren Wandteil 108 ebenfalls eine um ca. 1/3 dünnere Wandstärke aufweist. Die Vorteile und Effekte eines lamellenförmigen Federelementes wurden bei der zweiten Ausführungsform des Drehgelenkstielhaltes bereits erläutert und treffen auch beim Federelement 112 zu. Zusätzlich begünstigen die geometrie- und material-bedingten Eigenschaften der verjüngten Gelenkzonen 140 ein Nachfedern bzw. Wegfedern des Federelements 112, wenn es an seiner Rastfläche 130 mit Druck beaufschlagt wird. Dies wird besonders dann genutzt, wenn der Gehäuseteil 24 des erfindungsgemässen Drehgelenkhalters 10 von einer Rastposition in eine weitere Rastposition um die Drehachse 26' gedreht wird. Die Ausnehmungen 114 dienen dazu, Raum für die Federelemente 112 zu schaffen, wenn dieses von den Übergangsbereichen 142 bzw. den Restmantelflächen 124 des Sockelteils 22 radial nach aussen weggedrückt wird. Dadurch, dass die Ausnehmungen 114 die Federelemente 112 beim Ausrasten aus den jeweiligen Rastvertiefungen 80 aufnehmen, wird das äussere Erscheinungsbild (die Aussenkontur) des Gehäuseteils 24, insbesondere im radial äusseren Wandteil 108 des Sockelabschnitts 72 nicht beeinflusst. Durch die Federfreudigkeit der Federelemente 112 kann ein Einrasten des Federelements 30 in einer entsprechenden Rastvertiefung 80 dadurch einfach vom Anwender des Drehgelenkstielhalters 10 bzw. der Kehrvorrichtung 1 deutlich als solches erkannt werden.

Eine Unterseite 116 des Gehäuseteils 24 liegt in einer Ebene, welche in Richtung der Drehachse 26, 26' von der Oberseite 50 des Sockelteils 21 um ein geringes Mass versetzt ist, um keine unnötige Kontaktreibung zwischen der Unterseite 116 des Gehäuseteils 24 an der Oberseite 12 eines Kehrkopfs 14 hervorzurufen, welche den Drehpositionswechsel nur unnötig behindern würde.

Fig. 10 zeigt den erfindungsgemässen Drehventilhalter 10 der Fig.9 in einer perspektivischen Unteransicht. Jedes Federelement 112 ist in einem Federabschnitt 118 angeordnet, welcher sich radial zur Drehachse 26,26' seitlich von jedem der vier regelmässig voneinander entfernt angeordneten, vordefinierte Drehpositionen bildende Rastpositionen ausdehnt.

Bei allen drei Ausführungsformen sind als erster, den Sockelteil 22 bildenden Kunststoff Polypropylen, während als zweiter, den Gehäuseteil 24 bildenden Kunststoff Polyamid als Grundmaterialien ausgewählt und eingesetzt, da diese beiden Materialien einfach und wirtschaftlich zu bearbeiten sind, in Kombination miteinander geeignete Gleiteigenschaften aufweisen und während dem Spritzgiessen miteinander keine Verbindung eingehen, um die Drehbarkeit zu gewährleisten.

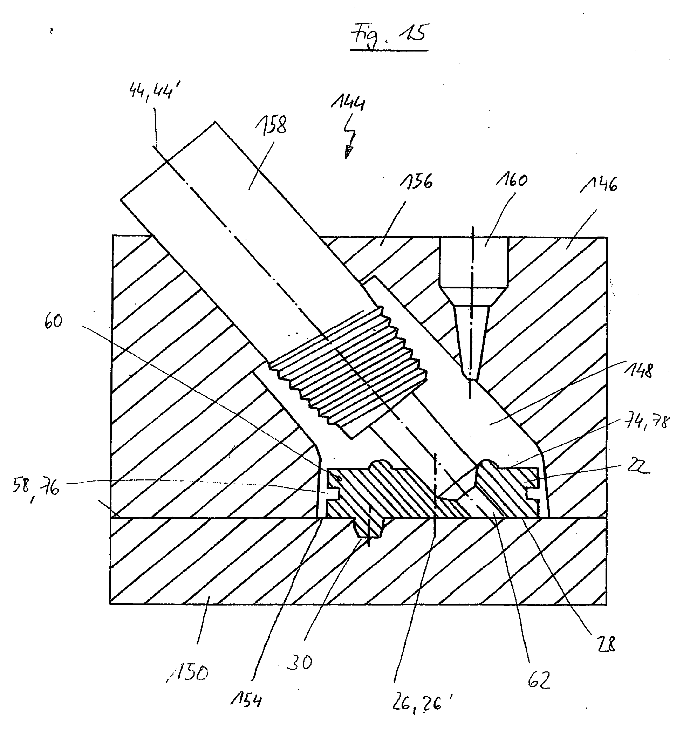

Die Fig.15 zeigt einen Querschnitt durch ein Spritzgiesswerkzeug 144 durch eine von den Drehachsen 26, 26' und den Schrägachsen 44, 44' gebildete Ebene, welche zugleich als Trennebene 146 des eine zweite Kavität 148 aufweisenden Spritzgiesswerkzeuges 144 dient. Das vierteilige Spritzgiesswerkzeug 144 soll zum Verständnis des Herstellungsprozesses eines erfindungsgemässen Drehgelenkstielhalters 10 beitragen. Das Spritzgiesswerkzeug 144 weist eine Basisplatte 150 auf, welche bereits zur Herstellung des Sockelteils 22 genutzt werden kann. Die Basisplatte 150 weist eine Oberseite 152 mit einer Kavitätswand 154 auf, an welche ein zweiteiliges Oberteil 156 dicht in Anlage gebracht ist. Die beiden Teile des zweiteiligen Oberteils 156 liegen in der Trennebene 146 dichtend aneinander und sind quer zur Trennebene 146 relativ zueinander bewegbar. Das Oberteil 156 weist zudem eine spritzdichte Lagerung und Halterung für einen Kernteil 158 auf, der dazu dient, die notwendige Komplementärform für die Aufnahmeöffnung 42, der Durchgangsöffnung 68 und der Schulter 64 für die Schraube 32, sowie allenfalls zu Zentrierzwecken, ein Abschnitt des Durchgangslochs 62 des Sockelteils 22 zu bilden. Der zweiteilige Oberteil 156 weist zum Einbringen eines zweiten Kunststoffs in die zweite Kavität 148 einen Einspritzkanal 160 auf. Der vereinfachten Darstellung sind weitere, zur Herstellung dienliche Hilfselemente wie Überlaufstutzen, Angussentferner und dergleichen weggelassen. Zur Herstellung eines erfindungsgemässen Drehgelenkstielhalters 10 wird ein in einer ersten Kavität hergestellter, teilausgehärteter, jedoch bereits formstabiler Sockelteil 22 mit seiner Unterseite 28 an die Kavitätswand 154 der zweiten Kavität 148 anliegend eingebracht. Der Sockelteil 22 ist durch Spritzgiessen, vorzugsweise mit Polypropylen in der nicht gezeigten ersten Kavität in bekannter Weise hergestellt worden. Das Einbringen kann dadurch geschehen, dass der Sockelteil 22 bereits auf der Basisplatte 150 mit seiner Unterseite 28 aufliegend in die zweite Kavität 148 gebracht wird, oder beispielsweise von einem Roboter in diese eingelegt wird. Die Mehrzahl von Vorsprüngen 30 auf der Unterseite 28 des Sockelteils 22 kann dabei zur Positionierung des Sockelteils 22 in der zweiten Kavität 148 beitragen. Sobald der zweiteilige Oberteil 156 und der Kernteil 158 wie in der Fig.15 gezeigt positioniert und spritzdicht miteinander verbunden sind, wird durch den Einspritzkanal 160 der zweite Kunststoff, vorzugsweise Polyamid eingespritzt. Dadurch, dass der Sockelteil 22 mit Ausnahme der Unterseite 28 vollständig vom zweiten Kunststoff umspritzt wird, wird die formschlüssige Halterung des Sockelteils 22 erzielt. Dadurch, dass der zweite Kunststoff beim Spritzgiessen keine Verbindung mit dem ersten Kunststoff eingeht, sind der Sockelteil 22 und der Gehäuseteil 24 um die Drehachse 26,26' drehbar.

Weist nun der zweite, in die zweite Kavität 148 eingespritzte Kunststoff ein kleineres Schwindmass als der erste Kunststoff auf, so kann diese Eigenschaft dazu benutzt werden, unter Beibehaltung des Formschlusses einen Spalt zwischen der Aussenkontur des Sockelteils 22 und dem Gehäuseteil 24 zu schaffen, was sich positiv auf die Drehfreudigkeit des Gehäuseteils 24 am Sockelteil 22 niederschlägt.

Zur Herstellung eines Drehgelenkstielhalters der dritten Ausführungsform werden den Volumen der Ausnehmungen 114 entsprechende Formschieber von der Basisplatte her in die zweite Kavität 148 eingeschoben, bzw. sind an diese angeformt.

Es ist denkbar, dass durch das Einspritzgiessen weitere Bauteile in den Gehäuseteil 24 mitintegriert werden, beispielsweise eine Metallbuchse mit einer Aufnahmeöffnung 42 und einem Innengewinde 70, wodurch die Lebensdauer der Kehrvorrichtung zusätzlich erhöht werden könnte.

Selbstverständlich ist es möglich, die Rastvertiefungen 80 des Sockelteils 22 bzw. Gehäuseteils 24 durch angeformte Rastnocken 52 zu ersetzen, und gegenförmig dazu die Rastnocken bzw. Rastvertiefungen entsprechend am Gehäuseteil 24 anzuordnen.

Es ist auch denkbar, dass Rastelemente sowohl mantelseitige, wie auch stirnseitig (gegen das Gehäuseinnere) gerichtete Rastelemente in Kombination angeordnet sind. Ebenso ist es denkbar, dass die Mantelkontur 122 eine Polygonform aufweisen kann, sofern eine entsprechende Innenmantelkontur 128 im Gehäuseteil 24 realisiert wird.

Zudem ist es vorstellbar, dass die Rastvertiefungen 80 am Sockelteil 22 der dritten Ausführungsform durch abgeflachte Abschnitte an der Mantelfläche 126 gebildet sind. Weiter ist es denkbar, dass die Rastvertiefungen bezüglich eines Durchmessers der Mantelfläche 126 zwar zurückversetzt, aber dennoch konvex geformt sind.

Es ist selbstverständlich auch möglich, durch Optimierung der Dimension und Geometrie des Kragens 60 und der Nut 58 des Sockelteils 22 bewusst eine gewisse Reibung zwischen dem Gehäuseteil 24 und dem Sockelteil 22 zu erzielen, um bspw. ein unbeabsichtigtes Verändern der Drehposition zu reduzieren.

Zudem ist es vorstellbar, dass der Sockelteil 22 bereits am Kehrkopf 14, bzw. Borstenträger angeformt ist.

Als Materialien für den Gehäuseteil 24 bzw. den Sockelteil 22 empfiehlt sich eine Werkstoffpaarung, welche einen tiefen resultierenden Reibungskoeffizienten aufweist, damit ein Verändern der Drehposition nicht durch zusätzliche Reibung unnötig erschwert wird. Es ist denkbar, dass der Sockelteil 22 aus einem anderen Kunststoff als Polypropylen besteht und der Gehäuseteil 24 aus einem anderen Kunststoff als Polyamid besteht, solange sich die beiden Kunststoffe beim Spritzgiessen nicht miteinander verbinden.

Es ist auch denkbar, zuerst den Gehäuseteil 24 herzustellen und anschliessend den Sockelteil 22 in diesen hineinzuspritzen.

Es ist selbstverständlich auch denkbar, dass der Sockelteil 22 schalenartig mit einem nach innen ragenden Kragen ausgeformt ist, um einen entsprechend ausgeformten Gehäuseteil 24 durch den Innenkragen formschlüssig und unverlierbar zu halten. In diesem Fall, wo der Gehäuseteil 24 innerhalb des Sockelteils 22 drehbar um die Drehachse 26, 26' angeordnet gelagert sein soll, wird empfohlen, den Gehäuseteil 24 aus Polypropylen herzustellen, während der Sockelteil 22 mit Vorteil aus Polyamid gefertigt wird. Durch das unterschiedliche Schwindverhalten der beiden Kunststoffe entsteht bei der Formung des Sockelteils 22 bei noch nicht vollständig ausgehärtetem aber bereits formstabilen Gehäuseteil 24 der Vorteil, dass sich nach abgeschlossenem Schwindprozess ein Spiel zwischen Gehäuse- und Sockelteil einstellt, welches ein Verstellen der Drehposition des Gehäuseteils 24 von einer Drehposition in eine weitere Drehposition erleichtert.

Da der Gehäuseteil 24 einteilig hergestellt ist, bleibt die Lage des Kehrkopfes 14 zum Stiel 46 konstant. Im Unterschied zum bekannten Drehgelenkstielhalter besteht beim erfindungsgemässen Drehgelenkstielhalter aufgrund des einteiligen, formstabilen Gehäuseteils 24 keine Gefahr, dass der Kehrkopfes 14 beim Einsatz der Kehrvorrichtung der Kehrkopf 14 relativ zur Schrägachse 44,44' und damit zum Stiel 46 wegknickt.

## Patentansprüche

1. Kehrvorrichtung, insbesondere Stossbesen oder Schrubber, mit einem Drehgelenkstielhalter (10), dessen Gehäuseteil (24) an einem an einer Oberseite (12) eines Kehrkopfes (14) befestigten Sockelteil (22) um eine Drehachse (26,26') drehbar gelagert ist, und einer Rastvorrichtung (88) zum Arretieren des Gehäuseteils (24) bezüglich des Sockelteils (22) in vordefinierten Drehpositionen, **dadurch gekennzeichnet, dass** der Sockelteil (22) des Drehgelenkstielhalters (10) aus einem ersten Kunststoff und der Gehäuseteil (24) des Drehgelenkstielhalters (10) aus einem zweiten Kunststoff gefertigt sind, wobei die Kunststoffe derart gewählt sind, dass sie sich beim Spritzgiessen nicht miteinander verbinden, der Gehäuseteil (24) formschlüssig und untrennbar am Sockelteil (22) gehalten ist und der Gehäuseteil (24) eine schräg zur Drehachse (26,26') verlaufende Aufnahmeöffnung (42) zum Befestigen eines Stiels (46) aufweist.

2. Kehrvorrichtung nach Anspruch 1 **dadurch gekennzeichnet, dass** die Aufnahmeöffnung (42) ein Innengewinde (70) aufweist.

3. Drehgelenkstielhalter mit einem Sockelteil (22), der dazu bestimmt ist, mit seiner Unterseite (28) an einer Oberseite (12) eines Kehrkopfs (14) anliegend befestigt zu sein, einem um eine Drehachse (26, 26') des Sockelteils drehbar gelagerten Gehäuseteil (24) und einer Rastvorrichtung (88) zum Arretieren des Gehäuseteils (24) bezüglich des Sockelteils (22) in vordefinierten Drehpositionen, **dadurch gekennzeichnet, dass** der Sockelteil (22) aus einem ersten Kunststoff und der Gehäuseteil (24) aus einem zweiten Kunststoff gefertigt sind, wobei die Kunststoffe derart gewählt sind, dass sie sich beim Spritzgiessen nicht miteinander verbinden, und der Gehäuseteil (24) formschlüssig und untrennbar am Sockelteil (22) gehalten ist und eine schräg zur Drehachse (26, 26') verlaufende Aufnahmeöffnung (42) zum Befestigen eines Stiels (46) aufweist.

4. Drehgelenkstielhalter nach Anspruch 3, **dadurch gekennzeichnet, dass** der Sockelteil (22) zur Bildung des Formschlusses einen rotationssymmetrisch zur Drehachse (26,26') angeordneten Kragen (60) aufweist, welcher von der Unterseite (28) des Sockelteils (22) beabstandet ist, und der Gehäuseteil (24) den Sockelteil (22) zwischen dessen Unterseite (28) und Kragen (60) hintergreift.

5. Drehgelenkstielhalter nach Anspruch 3 oder 4, **dadurch gekennzeichnet, dass** die Rastvorrichtung (88) am Sockelteil (22) und am Gehäuseteil (24) angeformte Rastelemente aufweist, welche in den vordefinierten Drehpositionen ineinander greifen und dadurch eine kraftschlüssige Arretierung des Gehäuseteils (24) bezüglich des Sockelteils (22) bilden.

6. Drehgelenkstielhalter nach Anspruch 5, **dadurch gekennzeichnet, dass** der Gehäuseteil (24) eine zu einer der Unterseite (28) des Sockelteils (22) abgewandten Oberseite (50) gegengleich geformte Innenfläche (78) aufweist, und die Oberseite (50) und die Innenfläche (78) auf einem, um die Drehachse (26,26') verlaufenden Rastelementteilkreis (54) angeordnete Rastelemente in Form von Rastnocken (52), beziehungsweise Rastvertiefungen (80) aufweisen.

7. Drehgelenkstielhalter nach Anspruch 5, **dadurch gekennzeichnet, dass** der Sockelteil (22) eine wenigstens annähernd kreiszylindrische Mantelfläche (56) und der Gehäuseteil (24) eine gegengleich geformte Innenmantelfläche (100) aufweisen, die Mantelfläche (56) und die Innenmantelfläche (100) mit Rastelementen in Form von Rastnocken (52), beziehungsweise Rastvertiefungen (80) versehen sind, und der Gehäuseteil (24) vorzugsweise oberhalb und unterhalb der Rastelemente in Umfangsrichtung verlaufende Schlitze (98) aufweist, um Federabschnitte (104) für die Rastelemente des Gehäuseteils (24) zu bilden.

8. Drehgelenkstielhalter nach Anspruch 5, **dadurch gekennzeichnet, dass** der Sockelteil (22) eine Mantelkontur (122) mit auf einem Kreiszylinder liegenden Restmantelflächen (124) und dazwischen angeordneten, bezüglich des Kreiszylinders radial nach innen versetzte Rastvertiefungen (80) aufweist, und der Gehäuseteil (24) eine gegengleich geformte Innenmantelkontur (128) mit federnd ausgebildeten Abschnitten (112) aufweist, welche in den Drehpositionen den Rastvertiefungen (80) gegenüberliegen.

9. Drehgelenkstielhalter nach einem der Ansprüche 3 bis 8, **dadurch gekennzeichnet, dass** der Sockelteil (22) auf seiner im Wesentlichen ebenen Unterseite (28) einen Vorsprung. (30) zum Eingreifen in eine Vertiefung (40) der Oberseite (12) des Kehrkopfes (14) und ein in die Unterseite (28) des Sockelteils (22) einmündendes Durchgangsloch (62) aufweist, welches dazu bestimmt ist, eine Befestigungsschraube (32) zum Befestigen des Sockelteils (22) am Kehrkopf (14) aufzunehmen.

10. Drehgelenkstielhalter nach einem der Ansprüche 3 bis 9, **dadurch gekennzeichnet, dass** der zweite Kunststoff ein kleineres Schwindmass aufweist als der erste Kunststoff.

11. Drehgelenkstielhalter nach einem der Ansprüche 3 bis 10, **dadurch gekennzeichnet, dass** als erster Kunststoff Polypropylen und als zweiter Kunststoff Polyamid gewählt sind.

12. Drehgelenkstielhalter nach einem der Ansprüche 3 bis 11, **dadurch gekennzeichnet, dass** die Aufnahmeöffnung (42), ein Innengewinde (70) aufweist.

13. Verfahren zur Herstellung eines Drehgelenkstielhalters gemäss einem der Ansprüche 3 bis 12, beinhaltend die Schritte:
- Spritzgiessen eines, eine Unterseite (28) aufweisenden Sockelteils (22) aus einem ersten Kunststoff in einer ersten Kavität;
- Einbringen des teilausgehärteten, jedoch bereits formstabilen Sockelteils (22) in eine zweite Kavität (148), so dass die Unterseite (28) des Sockelteils (22) flächig an einer Kavitätswand (154) anliegt; und
- Herstellen eines Gehäuseteils (24) durch Einspritzen eines zweiten Kunststoffs in die zweite Kavität (148), wobei der zweite Kunststoff mit dem ersten Kunststoff beim Spritzgiessen keine Verbindung eingeht und der zweite Kunststoff um den Sockelteil (22) gespritzt wird, um diesen formschlüssig und untrennbar zu halten.

14. Verfahren gemäss Anspruch 13, **dadurch gekennzeichnet, dass** als erster Kunststoff Polypropylen und als zweiter Kunststoff Polyamid verarbeitet wird.

15. Spritzgiesswerkzeug zur Herstellung eines Drehgelenkstielhalters gemäss einem der Ansprüche 3-12, mit einer Basisplatte (150) mit einer an ihrer Oberseite (152) befindlichen Kavitätswand (154), an welcher der teilausgehärtetes, bereits formstabiles Sockelteil (22) mit seiner Unterseite (28) anliegend einbringbar ist, sowie einem zweiteiligen Oberteil (156), welches dicht an der Kavitätswand (154) in Anlage gebracht ist, wobei die beiden Teile des Oberteils in einer durch eine durch eine Schrägachse (44, 44') und die Drehachse (26, 26') definierten Trennebene (146) dichtend aneinander liegen und quer zueinander bewegbar sind und das Oberteil (156) zudem eine spritzdichte Lagerung und Halterung für einen Kernteil (158) aufweist, dessen Zweck die Ausbildung der notwendigen Komplementärform für die Aufnahmeöffnung (42) ist, und ferner das Oberteil (156) zum Einbringen eines Kunststoffs in eine Kavität (148) einen Einspritzkanal (160) aufweist.

## Claims

1. Sweeping device, in particular a broom or a scrubber, having a rotary-joint handle mount (10), the housing part (24) of which is mounted so as to be rotatable about a rotation axis (26, 26') on a socket part (22) fastened to an upper side (12) of a sweeping head (14), and a latching device (88) for locking the housing part (24) in predefined rotational positions in relation to the socket part (22), **characterized in that** the socket part (22) of the rotary-joint handle mount (10) is made from a first plastic material and the housing part (24) of the rotary-joint handle mount (10) is made from a second plastic material, wherein the plastic materials are selected in such a manner that they do not bond during injection moulding, that the housing part (24) is held in a form-fitting and inseparable manner on the socket part (22), and that the housing part (24), for fastening a handle (46), has a receptacle opening (42) which runs in an oblique manner to the rotation axis (26, 26').

2. Sweeping device according to Claim 1, **characterized in that** the receptacle opening (42) has a female thread (70).

3. Rotary-joint handle mount having a socket part (22) which is conceived for being fastened by way of its lower side (28) bearing on an upper side (12) of a sweeping head (14), a housing part (24) which is mounted so as to be rotatable about a rotation axis (26, 26') of the socket part, and a latching device (88) for locking the housing part (24) in predefined rotational positions in relation to the socket part (22), **characterized in that** the socket part (22) is made from a first plastic material and the housing part (24) is made from a second plastic material, wherein the plastic materials are selected in such a manner that they do not bond during injection moulding, that the housing part (24) is held in a form-fitting and inseparable manner on the socket part (22), and that the housing part (24), for fastening a handle (46), has a receptacle opening (42) which runs in an oblique manner to the rotation axis (26, 26').

4. Rotary-joint handle mount according to Claim 3, **characterized in that** the socket part (22) for forming the form-fitting connection has a collar (60) which is disposed so as to be rotationally symmetrical to the rotation axis (26, 26') and which is spaced apart from the lower side (28) of the socket part (22), and that the housing part (24) engages behind the socket part (22) between the lower side (28) of the latter and the collar (60).

5. Rotary-joint handle mount according to Claim 3 or 4, **characterized in that** the latching device (88) has latching elements which are moulded on the socket part (22) and on the housing part (24) and which engage in one another in the predefined rotational positions and, on account thereof, form a force-fitting lock between the housing part (24) and the socket part (22).

6. Rotary-joint handle mount according to Claim 5, **characterized in that** the housing part (24) has an inner face (78) which is formed so as to be reciprocal with respect to an upper side (50) which faces away from the lower side (28) of the socket part (22), and that the upper side (50) and the inner face (78) have latching elements in the form of latching cams (52) or latching depressions (80), respectively, which are disposed on a latching-element pitch circle (54) which runs about the rotation axis (26, 26').

7. Rotary-joint handle mount according to Claim 5, **characterized in that** the socket part (22) has an at least approximately circular-cylindrical sleeve face (56) and the housing part (24) has a reciprocally shaped inner sleeve face (100), that the sleeve face (56) and the inner sleeve face (100) are provided with latching elements in the form of latching cams (52) or latching depressions (80), respectively, and that the housing part (24) preferably above and below the latching elements has slots (98) which run in the circumferential direction so as to form resilient portions (104) for the latching elements of the housing part (24).

8. Rotary-joint handle mount according to Claim 5, **characterized in that** the socket part (22) has a sleeve contour (122) having residual sleeve faces (124), which lie on a circular cylinder, and latching depressions (80) which are disposed therebetween and are radially inwardly offset in relation to the circular cylinder, and that the housing part (24) has a reciprocally shaped inner sleeve contour (128) with portions (112) which are configured so as to be resilient and which in the rotational positions lie opposite the latching depressions (80).

9. Rotary-joint handle mount according to one of Claims 3 to 8, **characterized in that** the socket part (22) on its substantially planar lower side (28) has a protrusion (30) for engaging in a depression (40) of the upper side (12) of the sweeping head (14) and a through-opening (62) which opens into the lower side (28) of the socket part (22) and which is conceived for receiving a fastening screw (32) for fastening the socket part (22) on the sweeping head (14).

10. Rotary-joint handle mount according to one of Claims 3 to 9, **characterized in that** the second plastic material has a lower shrinkage value than the first plastic material.

11. Rotary-joint handle mount according to one of Claims 3 to 10, **characterized in that** polypropylene is selected as the first plastic material and polyamide is selected as the second plastic material.

12. Rotary-joint handle mount according to one of Claims 3 to 11, **characterized in that** the receptacle opening (42) has a female thread (70).

13. Method for manufacturing a rotary-joint handle mount according to one of Claims 3 to 12, comprising the following steps:
- injection-moulding a socket part (22), having a lower side (28), of a first plastic material in a first cavity;
- introducing the partially cured but already dimensionally stable socket part (22) into a second cavity (148), such that the lower side (28) of the socket part (22) bears in a two-dimensional manner on a cavity wall (154); and
- manufacturing a housing part (24) by injecting a second plastic material into the second cavity (148), wherein the second plastic material does not bond with the first plastic material during injection moulding, and the second plastic material is injected around the socket part (22) in order for the latter to be held in a form-fitting and inseparable manner.

14. Method according to Claim 13, **characterized in that** polypropylene is processed as the first plastic material and polyamide is processed as the second plastic material.

15. Injection-moulding tool for manufacturing a rotary-joint handle mount according to one of Claims 3 to 12, having a base plate (150) with a cavity wall (154) which is located on the upper side (152) thereof and onto which the partially cured and already dimensionally stable socket part (22) is introducible so that its lower side (28) bears on said cavity wall (154), and a bipartite upper part (156) which is brought to tightly bear on the cavity wall (154), wherein the two parts of the upper part tightly bear on one another and are transversely movable in relation to one another in a separation plane (146) which is defined by an oblique axis (44, 44') and the rotation axis (26, 26'), and moreover the upper part (156) has an injection-proof bearing and mounting for a core part (158) of which the purpose is to configure the necessary complementary shape for the receptacle opening (42), and furthermore the upper part (156) has an injection duct (160) for introducing a plastic material into a cavity (148).

## Revendications

1. Dispositif de balayage, en particulier un balai à pousser ou un balai-brosse, comprenant un porte-manche avec joint rotatif (10), dont un élément de logement (24) est disposé de façon à pouvoir tourner autour d'un axe de rotation (26, 26') sur un socle (22) fixé à une partie supérieure (12) d'une tête de balayage (14), et un dispositif d'encliquetage (88) pour bloquer l'élément de logement (24) dans des positions de rotation prédéfinies par rapport au socle (22), **caractérisé en ce que** le socle (22) du porte-manche avec joint rotatif (10) est fabriqué avec une première matière plastique et l'élément de logement (24) du porte-manche avec joint rotatif (10) est fabriqué avec une deuxième matière plastique, **en ce que** les matières plastiques sont sélectionnées de telle façon qu'elles ne se lient pas lors du moulage par injection, **en ce que** l'élément de logement (24) est maintenu par adaptation de formes et de façon inséparable sur le socle (22) et **en ce que** l'élément de logement (24) comporte pour fixer un manche (46) une ouverture de réception (42) qui s'étend de façon oblique par rapport à l'axe de rotation (26, 26').

2. Dispositif de balayage selon la revendication 1, **caractérisé en ce que** l'ouverture de réception (42) comporte un filetage femelle (70).

3. Porte-manche avec joint rotatif comprenant un socle (22) qui est destiné à être fixé de façon ajustée avec sa face inférieure (28) à une face supérieure (12) d'une tête de balayage (14), un élément de logement (24) qui est disposé de façon à pouvoir tourner autour d'un axe de rotation (26, 26') du socle, et un dispositif d'encliquetage (88) pour bloquer l'élément de logement (24) dans des positions de rotation prédéfinies par rapport au socle (22), **caractérisé en ce que** le socle (22) est fabriqué avec une première matière plastique et l'élément de logement (24) est fabriqué avec une deuxième matière plastique, **en ce que** les matières plastiques sont sélectionnées de telle façon qu'elles ne se lient pas lors du moulage par injection, **en ce que** l'élément de logement (24) est maintenu par adaptation de formes et de façon inséparable sur le socle (22) et **en ce que** l'élément de logement (24) comporte pour fixer un manche (46) une ouverture de réception (42) qui s'étend de façon oblique par rapport à l'axe de rotation (26, 26').

4. Porte-manche avec joint rotatif selon la revendication 3, **caractérisé en ce que** le socle (22), pour établir la connexion par adaptation de formes, comporte un col (60) disposé de façon symétrique en rotation par rapport à l'axe de rotation (26, 26') et éloigné de la face inférieure (28) du socle (22), et **en ce que** l'élément de logement (24) accroche derrière le socle (22) entre la face inférieure (28) de celui-ci et le col (60).

5. Porte-manche avec joint rotatif selon les revendications 3 ou 4, **caractérisé en ce que** le dispositif d'encliquetage (88) comporte des éléments d'encliquetage moulés sur le socle (22) et sur l'élément de logement (24), qui s'accrochent l'un dans l'autre dans les positions de rotation prédéfinies et de ce fait établissent un blocage par friction de l'élément de logement (24) par rapport au socle (22).

6. Porte-manche avec joint rotatif selon la revendication 5, **caractérisé en ce que** l'élément de logement (24) comporte une face intérieure (78) formée de manière identique et opposée par rapport à une face supérieure (50) opposée à la face inférieure (28) du socle (22), et **en ce que** la face supérieure (50) et la face intérieure (78) comprennent des éléments d'encliquetage en forme d'ergot d'encliquetage (52) ou de cavité d'encliquetage (80) respectivement, disposés sur un cercle primitif des éléments d'encliquetage (54) qui s'étend autour de l'axe de rotation (26, 26').

7. Porte-manche avec joint rotatif selon la revendication 5, **caractérisé en ce que** le socle (22) comporte une surface latérale (56) au moins approximativement en forme de cylindre circulaire et l'élément de logement (24) comporte une surface latérale intérieure (100) formée de manière identique et opposée, **en ce que** la surface latérale (56) et la surface latérale intérieure (100) sont munis d'éléments d'encliquetage en forme d'ergot d'encliquetage (52) ou de cavité d'encliquetage (80) respectivement, et **en ce que** l'élément de logement (24) comporte de préférence au-dessus et en dessous des éléments d'encliquetage des fentes (98) qui s'étendent dans la direction circonférentielle de façon à former des parties de ressort (104) pour les éléments d'encliquetage de l'élément de logement (24).

8. Porte-manche avec joint rotatif selon la revendication 5, **caractérisé en ce que** le socle (22) comporte un contour latéral (122) avec des restes de surface latérale (124) situés sur un cylindre circulaire et des cavités d'encliquetage (80) disposées entre ceux-ci, de façon décalée radialement vers l'intérieur par rapport au cylindre circulaire, et **en ce que** l'élément de logement (24) comporte un contour latéral intérieur (128) formé de manière identique et opposée avec des parties (112) façonnées de manière à faire ressort et situées dans les positions de rotation à l'opposé des cavités d'encliquetage (80).

9. Porte-manche avec joint rotatif selon l'une des revendications 3 à 8, **caractérisé en ce que** le socle (22) comporte une saillie (30)sur sa face inférieure (28) essentiellement plane pour s'engager dans une cavité (40) de la face supérieure (12) de la tête de balayage (14) et un trou d'interconnexion (62) qui débouche sur la face inférieure (28) du socle (22) et qui est destiné à recevoir une vis de fixation (32) pour fixer le socle (22) sur la tête de balayage (14).

10. Porte-manche avec joint rotatif selon l'une des revendications 3 à 9, **caractérisé en ce que** la deuxième matière plastique présente un retrait plus petit que la première matière plastique.

11. Porte-manche avec joint rotatif selon l'une des revendications 3 à 10, **caractérisé en ce que** du polypropylène est sélectionné comme première matière plastique et du polyamide est sélectionné comme deuxième matière plastique.

12. Porte-manche avec joint rotatif selon l'une des revendications 3 à 11, **caractérisé en ce que** l'ouverture de réception (42) comporte un filetage femelle (70).

13. Procédé pour la fabrication d'un porte-manche avec joint rotatif selon l'une des revendications 3 à 12, comprenant les étapes suivantes:
- moulage par injection d'un socle (22) comportant une face inférieure (28) avec une première matière plastique dans une première cavité;
- introduction du socle (22) partiellement durci mais déjà stable dimensionnellement dans une deuxième cavité (148), de telle sorte que la face inférieure (28) du socle (22) repose à plat sur une paroi (154) de la cavité; et
- fabrication d'un élément de logement (24) par injection d'une deuxième matière plastique dans la deuxième cavité (148), la deuxième matière plastique ne se liant pas lors du moulage par injection avec la première matière plastique, et la deuxième matière plastique est injectée autour du socle (22) de façon à ce que celui-ci soit fixé par adaptation de formes et de façon inséparable.

14. Procédé selon la revendication 13, **caractérisé en ce que** le polypropylène est traité comme première matière plastique et le polyamide est traité comme deuxième matière plastique.

15. Outil de moulage par injection pour la fabrication d'un porte-manche avec joint rotatif selon l'une des revendications 3 à 12, comprenant une plaque de base (150) avec une paroi (154) de la cavité située sur la face supérieure (152) de ladite plaque de base et sur laquelle le socle (22) partiellement durci mais déjà stable dimensionnellement peut être introduit de telle sorte que sa face inférieure (28) repose sur la paroi (154) de la cavité, ainsi qu'une partie supérieure (156) en deux pièces qui est mise en appui étanche sur la paroi (154) de la cavité, dans lequel les deux pièces de la partie supérieure sont appliquées de manière étanche l'une contre l'autre et sont mobiles l'une par rapport à l'autre transversalement dans un plan de séparation (146) défini par un axe oblique (44, 44') et l'axe de rotation (26, 26'), et en outre la partie supérieure (156) comporte un logement et un support étanches lors de l'injection pour une pièce centrale (158) dont le but est de constituer la forme complémentaire nécessaire pour l'ouverture de réception (42), et de plus la partie supérieure (156) comporte un canal d'injection (160) pour introduire une matière plastique dans une cavité (148).
